# EUROPÄISCHE PATENTSCHRIFT

(11) **EP 3 967 572 B1**
(45) Veröffentlichungstag und Bekanntmachung des Hinweises auf die Patenterteilung: **18.06.2025**
(21) Anmeldenummer: 21194556.3
(22) Anmeldetag: 02.09.2021
(51) Int. Cl.: B62D 1/28, B62D 15/02, G08G 1/16

(54) **AUTOMATISCHES AUSWÄHLEN EINER AUS EINER MEHRZAHL VON PARKASSISTENZFUNKTIONEN BEI EINEM KRAFTFAHRZEUG**
AUTOMATIC SELECTION OF ONE OF A PLURALITY OF PARKING ASSIST FUNCTIONS IN A MOTOR VEHICLE
SÉLECTION AUTOMATIQUE À PARTIR D'UNE PLURALITÉ DE FONCTIONS D'AIDE AU STATIONNEMENT DANS UN VÉHICULE AUTOMOBILE

(30) Priorität: 15.09.2020 DE 102020211549
(43) Veröffentlichungstag der Anmeldung: 16.03.2022
(73) Patentinhaber: VOLKSWAGEN AG, 38440 Wolfsburg (DE)
(72) Erfinder: Seeland, Jana, 38448 Wolfsburg (DE); Göricke, Bastian, 38446 Wolfsburg (DE); Radimirsch, Dr. Markus, 31311 Uetze (DE); Hopp, Dr. Christian, 38302 Wolfenbüttel (DE)

(56) Entgegenhaltungen:
- EP-A1- 3 421 328
- DE-A1- 102018 105 649
- DE-A1- 102018 132 456
- JP-A- 2004 203 315
- US-A1- 2007 282 502

## Beschreibung

Die Erfindung betrifft ein Verfahren zum Betreiben eines Kraftfahrzeugs sowie ein Kraftfahrzeug, wobei zwischen einer Mehrzahl aus Parkassistenzfunktionen automatisch eine Auswahl getroffen werden kann. Das Kraftfahrzeug ist bevorzugt ein Personenkraftwagen oder ein Lastkraftwagen.

Es ist bekannt, einem Fahrzeugfahrer zur Unterstützung bei Parkvorgängen Parkassistenzfunktionen bereitzustellen. Die Parkvorgänge können Einparkvorgänge und/oder Ausparkvorgänge umfassen. Sie können auch Rangiervorgänge umfassen, z.B. in Engstellen, auf dem Weg zu einem Parkplatz (d.h. bei der Anfahrt des Parkplatzes) und/oder mit einem Anhänger. Die Parkassistenzfunktion kann allgemein das Ziel verfolgen, den Fahrer von der oftmals als schwierig empfundenen Aufgabe zu entlasten, das Fahrzeug unter der Wahl geeigneter Lenkwinkel und/oder Einschlagpunkte in die beengten Platzverhältnisse einer Parklücke hinein oder wieder aus dieser heraus zu manövrieren.

Derzeit bekannte Parkassistenzfunktionen zeichnen sich durch ein unterschiedliches Ausmaß des Funktionsumfanges und insbesondere der fahrerautonom (d.h. automatisch) vornehmbaren Aktionen aus. So offenbart die DE 10 2006 052 575 A1 eine Parkassistenzfunktion in Form eines sogenannten Parklenkassistenten, bei dem ein Fahrzeug automatisch ohne Lenkeingriffe eines Fahrers einparkbar ist. In derartigen Fällen, bei denen Lenkwinkel fahrerautonom eingestellt werden, kann von einer automatischen Querführung des Fahrzeugs gesprochen werden.

Auch fahrerautonome Längsführungen sind bekannt, bei denen unter gegebenenfalls vorzunehmender Gangwahl oder Fahrtrichtungswahl durch den Fahrzeugfahrer auch Fahrzeugbeschleunigungen fahrerautonom wählbar sind.

Weiterer technologischer Hintergrund findet sich in der DE 10 2012 221 036 A1 und DE 10 2012 101 686 A1.

Je nach den persönlichen Vorlieben eines Fahrzeugfahrers, insbesondere in Anbetracht einer aktuellen Parksituation, kann ein unterschiedliches Ausmaß der Unterstützung beim Parkvorgang gewünscht sein. Eine erste Erkenntnis der Erfindung besteht deshalb darin, dass einem Fahrer Parkassistenzfunktionen unterschiedlicher Art bereitgestellt werden sollten, zwischen denen ein Fahrer wählen kann. Diese Parkassistenzfunktionen können gemäß jeglichen der vorstehend geschilderten Beispiele ausgebildet sein, also sich durch ein unterschiedliches Ausmaß autonom ausführbarer Aktionen insbesondere hinsichtlich Querführung und/oder Längsführung auszeichnen.

Weiter kann jegliche hierin erwähnte Parkassistenzfunktion wenigstens in einem der folgenden Kontexte oder für wenigstens einen der folgenden Zwecke verwendbar sein: Unterstützung bei Parkvorgängen mit dem Fahrer im Fahrzeug, dabei insbesondere Unterstützung (bzw. Assistenz) bei oder Übernahme der Längs und/oder Querführung, insbesondere kann auch lediglich eine Unterstützung oder Übernahme der Querführung erfolgen; fahrerautonomes Parken, ohne dass der Fahrer sich im Fahrzeug befindet (sogenannter Remote Park Assist); Unterstützung bei (und/oder fahrerautonomes Durchführen von) Rangiervorgängen, beispielsweise in Engstellen, bei Wendevorgängen, auf trainierten Strecken, mit einem oder beim Ankoppeln von einem Anhänger.

Um aus einer entsprechenden Vielzahl vorhandener Parkassistenzfunktionen auszuwählen, muss ein Bediener bisher eine wenig intuitive Eingabe über gesonderte Bedienelemente vornehmen, beispielsweise per Betätigung eines Druckknopfes am Lenkrad und/oder eines virtuell eingeblendeten Bedienelements bzw. einer virtuellen Auswahloption, z.B. auf einem zentralen Fahrzeug-Touchscreen. Dies ist aus Sicht des Fahrers wenig komfortabel, potentiell fehleranfällig und stellt auch ein Sicherheitsrisiko dar, da der Fahrer dann beispielsweise im laufenden Straßenverkehr nach Auffinden einer geeigneten Parklücke nach der Eingabemöglichkeit zum Auswählen einer von ihm aktuell bevorzugten Parkassistenzfunktion suchen muss. Hierdurch kann er vom Verkehr abgelenkt werden.

Aus der EP 3 421 328 A1 ist ein gattungsgemäßes Verfahren zum Betreiben eines Kraftfahrzeugs für das Ausführen eines Parkvorgangs bekannt, wobei das Kraftfahrzeug wenigstens eine erste Parkassistenzfunktion und eine zweite Parkassistenzfunktion aufweist, die wahlweise auswählbar sind, wobei das Verfahren umfasst:
- Erfassen eines Greifzustandes einer Lenkhandhabe des Kraftfahrzeugs durch einen Fahrer und
- automatisches Auswählen der ersten oder der zweiten Parkassistenzfunktion in Abhängigkeit des Greifzustandes.

Ein ähnliches Verfahren ist aus der JP 2004 2033 15 A bekannt.

Die DE 10 2018 132 456 A1 offenbart ein Verfahren, wo das Loslassen des Lenkrades Teil einer Startsequenz eines automatisierten Parkvorgangs ist.

Die US 2007/282502 A1 offenbart eine Parkassistenzfunktion, bei der dem Fahrer zumindest temporär wirksame Momente als Lenkhinweis gegeben werden.

Aus der DE 10 2018 105 649 A1 ist ein Verfahren bekannt, bei dem ein Parkmodus vorausgewählt ist, wobei der Nutzer den vorausgewählten Parkmodus auch während des Parkvorgangs ändern kann.

Die Erfindung stellt sich daher die Aufgabe, das Auswählen einer geeigneten Parkassistenzfunktion zu verbessern, insbesondere hinsichtlich Bedienkomfort und/oder Betriebssicherheit des Kraftfahrzeugs.

Diese Aufgabe wird durch die Gegenstände der beigefügten unabhängigen Ansprüche gelöst. Vorteilhafte Weiterbildungen sind in den abhängigen Ansprüchen angegeben. Sämtliche der vorstehenden Erläuterungen und Definitionen können auch auf die Merkmale der vorliegenden Lösung zutreffen bzw. für diese Gültigkeit besitzen, sofern nicht anders angegeben oder ersichtlich.

Erfindungsgemäß wird ein Verfahren zum Betreiben eines Kraftfahrzeugs für das Ausführen eines Parkvorgangs vorgeschlagen, wobei das Kraftfahrzeug wenigstens eine erste Parkassistenzfunktion und eine zweite Parkassistenzfunktion aufweist (bzw. nach Maßgabe einer ersten und einer zweiten Parkassistenzfunktion betreibbar ist). Die Parkassistenzfunktionen sind verschieden voneinander, wahlweise auswählbar und/oder wahlweise aktivierbar und das Verfahren umfasst:
- Erfassen eines Greifzustands einer Lenkhandhabe des Kraftfahrzeugs durch einen Fahrer;
- automatisches Auswählen der ersten oder der zweiten Parkassistenzfunktion in Abhängigkeit des Greifzustands.

Die Parkassistenzfunktionen können durch wenigstens ein Steuergerät bereitgestellt sein und/oder Softwarefunktionen sein, die von wenigstens einem Steuergerät des Kraftfahrzeugs ausführbar sind. In an sich bekannter Weise können sie weitere Komponenten des Kraftfahrzeugs ansteuern und/oder hiervon Informationen erhalten, insbesondere Sensorsignale.

Die Lenkhandhabe kann ein Lenkrad sein. Der Greifzustand kann ein Nichtgreifen oder ein Greifen der Lenkhandhabe sein. Auch können Zwischenstufen detektierbar sein, beispielsweise das Greifen mit lediglich einer Hand oder das lediglich punktuelle Berühren mit einzelnen Fingern. Diese können optional als Greifen oder Nichtgreifen des Lenkrads klassifiziert werden. Alternativ können derartigen Zwischenstufen ebenfalls Assistenzfunktionen zugeordnet sein. Beispielsweise kann wenigstens eine dritte Assistenzfunktion einer detektierbaren Zwischenstufe zugeordnet sein. Allgemein kann aus Sicherheitsgründen bevorzugt lediglich ein beidhändiges Greifen der Lenkhandhabe als tatsächliches Greifen klassifiziert und erfasst werden.

Die Erfassung des Greifzustandes kann mittels bekannter und vorstehend erwähnter sensorischer Einrichtungen erfolgen, die z.B. auf kapazitiven Sensorprinzipien beruhen. Alternativ kommt eine optische Erfassung z.B. per Innenraumkamera in Betracht.

Die erste und die zweite Parkassistenzfunktion sind jeweils dazu eingerichtet, fahrerautonome Kräfte und/oder Momente in einem Lenksystem des Kraftfahrzeugs zu erzeugen. Mittels dieser Kräfte und/oder Momente kann eine Fahrzeugquerführung fahrerautonom durchführbar sein und/oder kann eine bevorzugte Lenkrichtung und/oder ein Einlenkpunkt einem Fahrer signalisiert werden. Im letzteren Fall kann keine vollständige Querführung fahrerautonom durchgeführt werden, sondern kann dieser durch lediglich temporäres Erzeugen eines Moments dazu angeregt werden, einen Lenkwinkel geeignet einzustellen.

In beiden Fällen können die Parkassistenzfunktionen auf wenigstens einen Aktor (insbesondere ein Elektromotor) in einem Lenksystem des Kraftfahrzeugs zugreifen und/oder diesen zum Erzeugen entsprechender Kräfte oder Momente ansteuern. Im Fall eines elektromechanischen Lenksystems bei aufrecht erhaltener mechanischer Kopplung zwischen Lenkhandhabe und einem Lenkgetriebe kann es sich hierbei um einen auf das Lenkgetriebe einwirkenden Aktor handeln (beispielsweise einen auf eine Zahnstange einwirkenden Aktor). Im Falle eines Steer-by-Wire-Lenksystems ohne entsprechende mechanische Kopplung kann es sich um den mit der Lenkhandhabe gekoppelten Reaktionskraftaktor handeln.

Die erste Parkassistenzfunktion ist dazu eingerichtet, an einer Lenkhandhabe zumindest temporär wirksame Momente als einen Lenkhinweis für den Fahrer zu erzeugen. Dieses Moment kann z.B. in Form eines Rucks erzeugt werden, um den Fahrer dazu zu veranlassen, in einem größeren Ausmaß einzulenken. Es kann sich aber auch um ein Zusatzlenkmoment handeln, mit dem der Lenkwiderstand in wenigstens einer Richtung reduziert werden kann. Auch dies kann vom Fahrer als Lenkhinweis wahrnehmbar sein.

Die Lenkmomente der ersten Parkassistenzfunktion sind bevorzugt geringer als die der zweiten. Sie können nicht ausreichend sein, um das Fahrzeug vollständig autonom querzuführen.

Eine solche Parkassistenzfunktion kann den Einparkvorgang unterstützen, diesen nicht aber ohne manuellen Eingriff selbsttätig ausführen. Alternativ zu einer zumindest temporären Momentenerzeugung können mit der ersten Parkassistenzfunktion z.B. visuelle und/oder hörbare Lenkhinweise ausgegeben werden.

Die zweite Parkassistenzfunktion ist hingegen eingerichtet, das für das Parken erforderliche Lenkmoment fahrerautonom und bevorzugt vollständig fahrerautonom zu erzeugen. Mit anderen Worten kann sie also eine fahrerautonome Querführung des Fahrzeugs durchführen und/oder veranlassen. Zusätzlich oder alternativ kann auch eine fahrerautonome Längsführung gemäß herkömmlicher Varianten vorgesehen sein.

Wie erwähnt, kann dann, wenn sich der Greifzustand verändert, zu der entsprechend anderen von erster und zweiter Parkfunktion gewechselt werden. Folglich kann also nach einem automatischen Auswählen der ersten und zweiten Parkassistenzfunktion der Greifzustand fortlaufend überwacht werden und kann dann, gegebenenfalls auch mehrmals bei wiederholten Änderungen, zwischen der ersten und zweiten Parkfunktion gewechselt werden.

In diesem Zusammenhang kann insbesondere vorgesehen sein, dass von der ersten zu der zweiten Parkassistenzfunktion gewechselt wird, wenn der Greifzustand ein Nichtgreifen (z.B. ein Loslassen) der Lenkhandhabe durch den Fahrer anzeigt. Diese Variante ist besonders dann vorteilhaft, wenn die erste Parkassistenzfunktion in der vorstehend geschilderten Art lediglich Lenkhinweise bereitstellt. Der Fahrer soll den gegebenen Lenkhinweis dann selbständig bzw. manuell umsetzen. Greift dieser aber die Lenkhandhabe nicht bzw. lässt diese los, ist es vorteilhaft, automatisch zu einer anderen (insbesondere der zweiten) Parkassistenzfunktion zu wechseln, mit der eine höhere Autonomiestufe erzielbar ist und/oder mit der weniger Eingriffe durch den Fahrer erforderlich sind. Ein Unterschied der Parkassistenzfunktionen liegt also vorzugsweise darin, ob der Fahrer selbst Lenkung (und ggf. Gas und Bremse) betätigt (erste Parkassistenzfunktion) oder ob das Fahrzeug dies fahrerüberwacht selbsttätig durchführt (zweite Parkassistenzfunktion).

Zusätzlich oder alternativ kann vorgesehen sein, dass von der zweiten zu der ersten Parkassistenzfunktion gewechselt wird, wenn der Greifzustand ein Greifen der Lenkhandhabe durch den Fahrer anzeigt. Dies kann signalisieren, dass der Fahrer selbst die Querführung übernehmen möchte, sodass das fahrerautonome Erzeugen von Lenkmomenten vorteilhafterweise begrenzt werden sollte.

Weiter sieht das Verfahren ein initiales Auswählen einer von erster und zweiter Parkassistenzfunktion vor. Dies erfolgt auf Basis wenigstens einer Konfigurationsvorgabe. Das Verfahren weist dann ferner auch auf: Auswählen und dadurch Wechseln zu der entsprechend anderen von erster und zweiter Parkassistenzfunktion auf Basis des erfassten Greifzustands. Dies kann zumindest dann erfolgen, wenn der Greifzustand eine andere bevorzugte Parkassistenzfunktion anzeigt oder mit einer solchen assoziiert ist. Solange die initiale Funktion mit dem Greifzustand korrespondiert (z.B. diesem zugeordnet ist), kann sie beibehalten werden. Bei der Konfigurationsvorgabe kann es sich um eine seitens des Fahrzeugherstellers und/oder eines Fahrzeugbesitzers konfigurierbare Vorgabe handeln. Diese kann, beispielsweise auf Grundlage nachstehend erläuterter Zustandsbedingungen und/oder feststehender oder flexibler Kriterien, vorgeben, in welchen Situationen die erste oder zweite Parkassistenzfunktion initial ausgewählt werden soll. Dies ermöglicht, dass dem Fahrer von vornherein eine situationsgerechte Parkassistenzfunktion bereitgestellt bzw. diese bevorzugt automatisch initial eingestellt wird. Falls sich diese Auswahl aus Sicht des Fahrers als unangemessen herausstellt, kann der Fahrer durch Ändern des Greifzustands zu einer von ihm bevorzugten Parkassistenzfunktion wechseln. Dann kann fahrerautonom eine in Anbetracht des geänderten Greifzustands situationsgerechtere Parkassistenzfunktion aktiviert werden.

Erfindungsgemäß definiert die Konfigurationsvorgabe zumindest eine Zustandsbedingung, die zum initialen Auswählen der ersten oder zweiten Parkassistenzfunktion zu erfüllen ist. Die Zustandsbindung kann beispielsweise den Zustand des Fahrers, des Fahrzeugs und/oder der Fahrzeugumgebung, insbesondere der Einparksituation, beschreiben.

Beispielsweise kann dann, wenn sich das Fahrzeug nahe einem definierten Ort befindet, an dem beispielsweise häufiger Parkvorgänge stattfinden und/oder im Rahmen einer Parkassistenzfunktion vollständig automatische Parkvorgänge vormals eintrainiert wurden, eine Parkassistenzfunktion mit einer entsprechend hohen Autonomiestufe aktiviert werden. Die Zustandsbedingung betrifft in diesem Fall den Ort des Fahrzeugs bzw. die Nähe zu einem Ort mit entsprechend eintrainiertem Parkvorgang. Weiter kann als Zustandsbedingung das Vorhandensein eines Anhängers detektiert werden und kann dann z.B. eine geeignet angepasste Parkassistenzfunktion mit bevorzugt hoher Autonomiestufe aktiviert werden. Ebenso kann dann, wenn ein Gurtschloss des Fahrers gelöst ist oder gelöst wurde, ein Anhängerankoppelassistent als eine Parkassistenzfunktion aktiviert werden, wie z.B. in der DE 10 2017 220 459 A1 der Anmelderin beschrieben. Weiter kann bei Lösen des Gurtschlosses ein Remote Park Assist der oben genannten Art aktiviert werden kann, bei dem der Fahrer den Einparkvorgang des Fahrzeugs überwacht, während er sich in der Nähe des Fahrzeug (aber nicht im Fahrzeug) befindet

Als ein weiterer allgemeiner Aspekt dieser Offenbarung kann vorgesehen sein, vor tatsächlicher Aktivierung einer Parkassistenzfunktion (d.h. tatsächlicher Ausführung hiervon z.B. durch ein Steuergerät) den Fahrer um eine Bestätigung der entsprechend zur Aktivierung ausgewählten Parkassistenzfunktion zu veranlassen. Beispielsweise kann eine entsprechend ausgewählte Parkassistenzfunktion visuell oder per Audioausgabe einem Fahrer mitgeteilt werden und dieser kann um Bestätigung und/oder Freigabe der tatsächlichen Aktivierung bzw. Umsetzung dieser Parkassistenzfunktion gebeten werden. Diese Variante ist insbesondere bei einem initialen Auswählen einer Parkassistenzfunktion vorteilhaft, wie dies vorstehend diskutiert wurde, um Fehlauswahlen zu vermeiden. Alternativ kann aber jegliche hierin automatisch ausgewählte Parkassistenzfunktion direkt auch automatisch aktiviert bzw. automatisch umgesetzt werden (d.h. kann insbesondere beginnen, fahrerautonom Kräfte/Momente zu erzeugen). Dies gilt insbesondere für Parkassistenzfunktionen, die während eines bereits laufenden Einparkvorgangs ausgewählt werden, beispielsweise infolge eines sich ändernden Greifzustandes.

Eine bevorzugte Ausführungsform sieht vor, dass das Verhalten des Fahrzeugs bzw. eines Steuergeräts hiervon in Reaktion auf einen sich ändernden Greifzustand konfigurierbar ist. Insbesondere kann ein Fahrer konfigurieren, vorzugsweise flexibel und/oder reversibel, ob er bei einem sich ändernden Greifzustand einen automatischen Wechsel zu einer anderen Parkassistenzfunktion wünscht und/oder ob dann sämtliche Parkassistenzfunktionen beendet werden sollen. Auch kann er Bedingungen oder Zustände der vorstehend geschilderten Art definieren, wonach nur bei bestimmten Veränderungen des Greifzustands zwischen dann bevorzugt konkret angegebenen Parkassistenzfunktionen gewechselt werden soll.

Auch die Zustandsbedingungen zum Festlegen initial ausgewählter Parkassistenzfunktionen können durch den Fahrer konfigurierbar sein. Hierfür kann der Fahrer insbesondere logische Verknüpfungen vorgeben, welche die Zustandsbedingung sowie die bei Vorliegen dieser Zustandsbedingung durchzuführende Aktion beschreiben. Weiter kann auch eine Alternative angegeben sein, welche die festzulegende Aktion definiert, die bei Nichterfüllen der Zustandsbedingung auszuführen ist. Derartige logische Verknüpfungen können als WENN-DANN-SONST-Beziehung bzw. -Verknüpfung bezeichnet werden.

Zusätzlich oder alternativ zu dem Überwachen von Veränderungen des Greifzustands kann während des laufenden Einparkvorgangs auch wenigstens eine anderweitige Interaktion des Fahrers mit dem Fahrzeug überwacht und/oder erfasst werden. Insbesondere kann die Betätigung eines Gaspedals, Bremspedals, Kupplungspedals oder einer Gangschaltung erkannt werden. Dies kann als Wunsch des Fahrers interpretiert werden, von einer Parkassistenzfunktion mit hoher Autonomiestufe (insbesondere der zweiten Parkassistenzfunktion) zu einer Parkassistenzfunktion mit niedriger Autonomiestufe (insbesondere der ersten Parkassistenzfunktion) zu wechseln. Alternativ kann bei Erfassen einer entsprechenden Betätigung eine aktuell ausgewählte Parkassistenzfunktion deaktiviert werden und kann keine andere Parkassistenzfunktion aktiviert werden, d.h. kann der Fahrer die vollständige manuelle Kontrolle über das Fahrzeug wiedererlangen.

Zusätzlich oder alternativ kann vorgesehen sein, dass insbesondere dann, wenn eine Parkassistenzfunktion mit autonomer Längsführung ausgewählt wird, vor tatsächlicher Aktivierung bzw. Umsetzung der Parkassistenzfunktion wenigstens eine Aktivierungsbedingung überprüft wird. Dies kann beispielsweise eine Überprüfung dahingehend umfassen, ob der Fahrer auf seinem Sitz sitzt, beispielsweise mittels Sitzsensoren. Zusätzlich oder alternativ kann eine Aufmerksamkeitsüberprüfung des Fahrers erfolgen, beispielsweise durch Blickwinkelerfassung, um sicherzustellen, dass dieser den Einparkvorgang überwacht und zuverlässig eingreifen kann. Auch kann als Aktivierungskriterium eine bestimmte Betätigung des Fahrers angefordert werden, z.B. eine Bremsbetätigung, wodurch zumindest indirekt signalisiert wird, dass der Fahrer in der Lage ist, den Einparkvorgang zu überwachen.

Die Erfindung betrifft auch ein Kraftfahrzeug, aufweisend:
- eine Lenkhandhabe;
- eine Sensoreinrichtung zum Ermitteln eines Greifzustands der Lenkhandhabe durch einen Fahrzeugfahrer;
- ein Steuergerät, das dazu eingerichtet ist, zwischen einer ersten und einer zweiten Parkassistenzfunktion in Abhängigkeit des ermittelten Greifzustands auszuwählen.

Allgemein ist das Kraftfahrzeug und insbesondere das Steuergerät dazu eingerichtet, ein Verfahren gemäß jeglichen hierin geschilderten Aspekten auszuführen. Prinzipiell kann das Kraftfahrzeug und insbesondere das Steuergerät jegliches weitere Merkmal und/oder jegliche weitere Funktion umfassen, um sämtliche hierin geschilderten verfahrensgemäßen Maßnahmen, Wechselwirkungen und Effekte bereitzustellen. Sämtliche Erläuterungen von und Weiterbildungen zu Verfahrensmerkmalen können auf gleichlautende Merkmale des Kraftfahrzeugs und insbesondere des Steuergeräts ebenso zutreffen bzw. bei diesen vorgesehen sein.

Das Steuergerät kann wenigstens eine Prozessoreinrichtung und/oder eine Speichereinrichtung aufweisen. Auf der Speichereinrichtung können Programmanweisungen hinterlegt sein, die bei Ausführen durch die Prozessoreinrichtung das Steuergerät zum Durchführen sämtlicher hierin geschilderten Maßnahmen und insbesondere Verfahrensschritte veranlassen. Das Steuergerät kann mittels der Sensoreinrichtung datenübertragend verbunden sein, beispielsweise über einen Kommunikationsbus. Die Parkassistenzfunktionen können von dem Steuergerät ausgeführt werden, wenn diese nach einer entsprechenden Auswahl aktiviert werden (oder durch die Auswahl automatisch aktiviert sind). Hierfür kann das Steuergerät in an sich bekannter Weise einen Aktor des Lenksystems und vorzugsweise einen mit der Lenkhandhabe gekoppelten Aktor ansteuern.

Ausführungsbeispiele der Erfindung werden im Folgenden anhand der beigefügten schematischen Figuren erläutert. Figurenübergreifend können dabei für gleichwirkende oder gleichartige Merkmale gleiche Bezugszeichen verwendet werden.
- Fig. 1: zeigt ein Kraftfahrzeug gemäß einem Ausführungsbeispiel der Erfindung, das dazu eingerichtet ist, erfindungsgemäße Verfahren auszuführen.
- Fig. 2: zeigt ein Ablaufschema eines Verfahrens gemäß einem ersten Ausführungsbeispiel, das von dem Fahrzeug aus Fig. 1 ausführbar ist.
- Fig. 3: zeigt ein Ablaufschema eines Verfahrens gemäß einem zweiten Ausführungsbeispiel, das von dem Fahrzeug aus Fig. 1 ausführbar ist.

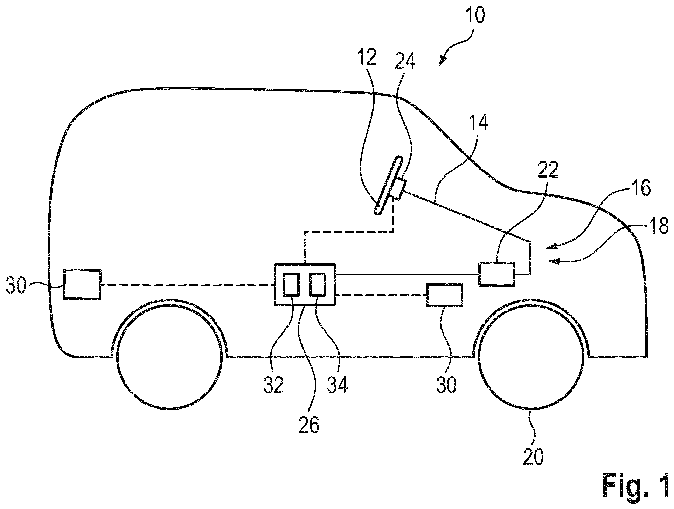

In Fig. 1 ist ein stark vereinfacht dargestelltes Kraftfahrzeug 10 gezeigt. Die Ansicht entspricht einer Seitenansicht, wobei jedoch Fahrzeugtüren weggelassen und einzelne von außen an sich nicht einsehbare Komponenten des Kraftahrzeugs 10 aus Darstellungsgründen abgebildet sind.

Das Kraftfahrzeug 10 ist ein Personenkraftwagen. Es umfasst eine Lenkhandhabe in Form eines Lenkrads 12. Dieses ist über eine Lenkstange 14 mit einem Lenksystem 16 gekoppelt. Das Lenksystem 16 umfasst ein Lenkgetriebe 18, das mechanisch mit den Vorderrädern 20 verbunden ist. Das Lenkgetriebe 18 ist stark vereinfacht abgebildet. Mit dem Lenkgetriebe 18 ist auch ein Lenkaktor 22 gekoppelt. Dieser kann in bekannter Weise insbesondere auf eine Zahnstange einwirken und dadurch das Lenkgetriebe 18 bzw. hiermit gekoppelte Vorderräder 20 fahrerautonom auslenken. Da aber die Lenkhandhabe 12 über die Lenkstange 14 mit dem Lenkgetriebe 18 gekoppelt ist, werden hierdurch auch Momente auf die Lenkhandhabe 12 übertragen. Anders ausgedrückt kann der Aktor 22 also auch am Lenkrad 12 wirksame Momente erzeugen, gleichzeitig aber auch fahrerautonom die Vorderräder 20 auslenken.

An der Lenkhandhabe 12 ist eine Sensoreinrichtung 24 angeordnet. Hierbei handelt es sich um eine an sich bekannte Freihandfahrt-Sensoreinrichtung oder auch Hands-off-Erkennungseinrichtung. Diese ist dazu eingerichtet, das Greifen und Nichtgreifen der Lenkhandhabe 12 durch den Fahrer zu detektieren.

Das Kraftfahrzeug 10 umfasst ferner ein Steuergerät 26. Wie über gestrichelte Datenverbindungen angedeutet, ist dieses mit der Sensoreinrichtung 24 verbunden. Es kann also von der Sensoreinrichtung 24 Informationen darüber erhalten, welcher Greifzustand (Greifen oder Nichtgreifen) der Lenkhandhabe 12 aktuell vorliegt oder kann Informationen von der Sensoreinrichtung 24 erhalten, um diese Informationen daraus zu bestimmen.

Weiter ist das Steuergerät 26 mit dem Aktor 22 verbunden. Hierdurch ist das Steuergerät 26 dazu eingerichtet, den Aktor 22 anzusteuern, damit dieser Momente in das Lenkgetriebe 18 einbringt bzw. darauf überträgt. Auf diese Weise kann zum einen fahrerautonom (d.h. per Aktor 22) ein lenkwirksamer Radlenkwinkel eingestellt werden, d.h. kann das Fahrzeug 10 autonom gelenkt werden und genauer gesagt quergeführt werden. Andererseits kann hierdurch aufgrund der geschilderten mechanischen Kopplung mit der Lenkhandhabe 12 ein an der Lenkhandhabe 12 wahrnehmbares Rückkopplungsmoment erzeugt werden.

Darauf hinzuweisen ist, dass im Fall von Steer-by-Wire-Lenksystemen das Moment an der Lenkhandhabe 12 vorzugsweise über einen separaten Aktor erzeugt wird, der ebenfalls mit der Steuereinrichtung 26 gekoppelt sein kann.

Weiter ist das Steuergerät 26 mit lediglich beispielhaft zwei und bevorzugt deutlich mehr Umfeldsensoren 30 verbunden. Hierüber können Umfeldinformationen erfasst werden und können beispielsweise in bekannter Weise Parklücken automatisch erkannt werden.

Das Steuergerät 26 umfasst auch eine angedeutete Prozessoreinrichtung 32 und eine Speichereinrichtung 34. Auf der Speichereinrichtung 34 sind verschiedene Parkassistenzfunktionen in Form von Programmen, Softwaremodulen oder Softwareapplikationen hinterlegt. Bei Ausführung durch die Prozessoreinrichtung 32 kann das Steuergerät 26 das Fahrzeug 10 nach Maßgabe dieser Parkassistenzfunktionen betreiben und z.B. nach deren Maßgabe den Aktor 22 ansteuern.

Dabei ist vorliegend nur eine der Parkassistenzfunktionen zu einem gegebenen Zeitpunkt in der Weise ausführbar, dass sie in eine Querführung eingreift (kann also stets nur eine Assistenzfunktion zu einem gegebenen Zeitpunkt in die Querführung eingreifen). Folglich kann der Aktor 22 nicht gleichzeitig von/mit verschiedenen Parkassistenzfunktionen zum Eingreifen in die Querführung angesteuert werden.

In dem gezeigten Beispiel ist die erste Parkassistenzfunktion für ein primär manuelles Parken vorgesehen und das Steuergerät 26 erzeugt mittels des Aktors 22 lediglich temporär an der Lenkhandhabe 12 wahrnehmbare Momente als Lenkhinweise. Hierdurch wird eine Querführung des Fahrzeugs 10 nicht vollständig fahrerautonom ausgeführt. Insbesondere erfolgt keine derartig ausgeprägte Querführung, dass hierdurch ein- oder Ausparken möglich wäre. Stattdessen wird über die an der Lenkhandhabe 12 erzeugten Momente lediglich ein Lenkhinweis an den Fahrer ausgegeben, beispielsweise wenn dieser einen geeigneten Einlenkpunkt zum Einfahren in eine erkannte Parklücke erreicht hat.

Ferner ist eine zweite Parkassistenzfunktion bereitgestellt, mittels der das Kraftfahrzeug 10 fahrerautonom quergeführt und optional auch längsgeführt wird. Der Fahrer erzeugt dann bevorzugt keinerlei lenkwirksamen Momente während eines Parkvorgangs, sondern diese werden bevorzugt ausschließlich fahrerautonom erzeugt.

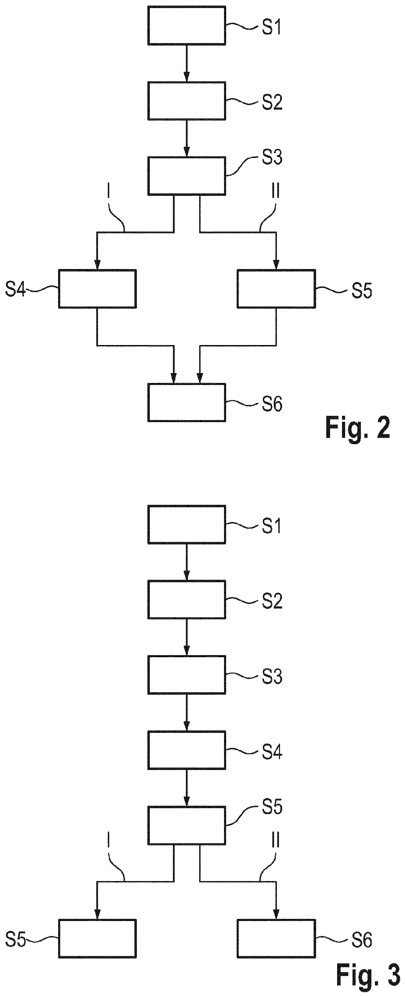

Das Steuergerät 26 ist dazu eingerichtet, Verfahren der nachstehend anhand von Fig. 2 und Fig. 3 beispielhaft erläuterten Art auszuführen.

Gemäß dem beispielhaften Verfahren aus Fig. 2 wird in einem Schritt S1 zunächst ein Einparkwunsch des Fahrers erkannt. Dies kann dadurch erfolgen, dass der Fahrer das automatische Suchen nach Parklücken aktiviert und/oder allgemein eine entsprechende Eingabe über ein nicht gesondert dargestelltes Bedienelement oder eine Bedienmöglichkeit (z.B. per Sprachbefehl) tätigt. In an sich bekannter Weise wird das Kraftfahrzeug daraufhin mittels der Umfeldsensoren 30 das Fahrzeugumfeld erfassen und versuchen, Parklücken zu identifizieren.

In einem Schritt S2 wird festgestellt, dass ein Parkvorgang tatsächlich ausgeführt werden soll bzw. bevorsteht. Dies kann beispielsweise dann der Fall sein, wenn eine Parklücke erkannt wurde, dies dem Fahrer signalisiert wird (z.B. per Ausgabe visueller Informationen oder per Audioausgabe) und der Fahrer daraufhin das Fahrzeug anhält. In einem Schritt S3 ermittelt das Steuergerät 36 durch Zugriff auf die Sensoreinrichtung 24 einen aktuellen Greifzustand. Entspricht dieser einem Greifen der Lenkhandhabe 12 (Pfeil I in Fig. 2), wird in Schritt S4 die geschilderte erste Parkassistenzfunktion als eine zumindest initiale Parkassistenzfunktion automatisch ausgewählt und automatisch aktiviert (d.h. von der Steuereinrichtung 20 ausgeführt). Durch Greifen der Lenkhandhabe 12 signalisiert der Fahrer, dass er die Kontrolle über den Einparkvorgang zumindest teilweise behalten möchte. Wird hingegen im Schritt S3 ein Nichtgreifen der Lenkhandhabe 12 als Greifzustand ermittelt (siehe Pfeil II in Fig. 2), wird die zweite Parkassistenzfunktion ausgewählt und aktiviert. Optional kann daraufhin in einem Schritt S6 unabhängig von der aktivierten Parkassistenzfunktion eine Veränderung des Greifzustands fortlaufend überwacht werden. Bei einer festgestellten Veränderung (also von einem initialen Greifen zu einem Nichtgreifen oder umgekehrt) kann zu der entsprechend anderen, initial nicht ausgewählten Parkassistenzfunktion gewechselt werden.

Alternativ kann statt einem Wechsel eine aktuelle Parkassistenzfunktion deaktiviert und keine neue andere Parkassistenzfunktion aktiviert werden, kann also eine Parkunterstützung gänzlich unterbunden werden.

In Fig. 3 ist ein Verfahrensablauf gemäß einem alternativen Ausführungsbeispiel gezeigt. In einem Schritt S1 wird erneut ein Parkwunsch des Fahrers analog zur Variante aus Fig. 2 ermittelt. Weiter wird im Schritt S2 erneut analog zur Variante aus Fig. 2 festgestellt, dass der Parkvorgang unmittelbar bevorsteht. In einem Schritt S3, der prinzipiell auch vor oder parallel zu dem Schritt S2 ausgeführt werden kann, werden daraufhin zum Wählen einer initialen Parkassistenzfunktion vorbestimmte und beispielsweise in der Speichereinrichtung 34 hinterlegte Konfigurationsvorgaben überprüft. Insbesondere wird überprüft, ob bzw. welche Parkassistenzfunktion nach Maßgabe dieser Konfigurationsvorgaben aktuell (zumindest initial) auszuwählen ist. Hierzu können Zustandsbedingungen der im allgemeinen Beschreibungsteil erläuterten Art erfasst und/oder überprüft werden. Diese können auch unabhängig von einem Greifzustand der Lenkhandhabe 12 sein.

In einem Schritt S4 wird anhand der Konfigurationsvorgabe eine initial ausgewählte Parkassistenzfunktion aktiviert und der Parkvorgang daraufhin begonnen. In einem Schritt S5 wird während des Parkvorgangs der Greifzustand überwacht. Verändert sich dieser, kann gemäß den Pfeilen I, II zu einer anderen Parkassistenzfunktion gewechselt werden. Beispielsweise kann gemäß dem Pfeil I ein Wechsel von einem anfänglichen Greifen zu einem Nichtgreifen vorliegen und kann daraufhin die zweite Parkassistenzfunktion aktiviert werden. Gemäß dem Pfeil II kann hingegen von einem Nichtgreifen zu einem Greifen gewechselt werden und kann daraufhin die erste Parkassistenzfunktion aktiviert werden. Auch eine anschließende fortlaufende Überwachung analog zu dem Schritt S6 aus Fig. 2 ist möglich. Ebenso kann jegliche Unterstützung bzw. Parkassistenzfunktion bei einem erneuten Verändern des Greifzustandes deaktiviert werden.

Die gezeigten Ausführungsbeispiele sind um sämtliche weitere Varianten des allgemeinen Beschreibungsteils erweiterbar und/oder entsprechend veränderbar. Beispielsweise kann nach der Auswahl einer Parkassistenzfunktion zusätzlich oder alternativ zum Greifzustand auch eine andere vorbestimmte Betätigung des Fahrers überprüft werden, insbesondere von einem Bremspedal. Liegt diese vor, kann die Parkassistenzfunktion gewechselt werden oder können sämtliche Parkassistenzfunktionen grundsätzlich deaktiviert werden. Weiter kann im Rahmen der geschilderten Verfahren und insbesondere demjenigen aus Fig. 3 vorgesehen sein, dass ein Fahrer die Konfigurationsvorgabe zum Auswählen einer initial aktiven Parkassistenzfunktion flexibel anpasst bzw. verändert. Hierzu kann er beispielsweise Situationen definieren, in denen er eine der Parkassistenzfunktionen bevorzugt initial automatisch aktivieren möchte und dies kann in der Zukunft dann entsprechend umgesetzt werden. Vorzugsweise wird dann aber zusätzlich der Greifzustand evaluiert oder im Rahmen des Parkvorgangs überwacht, um die initial ausgewählte Parkassistenzfunktion gegebenenfalls wechseln zu können.

### Bezugszeichenliste

- 10: Kraftfahrzeug
- 12: Lenkhandhabe
- 14: Lenkwelle
- 16: Lenksystem
- 18: Lenkgetriebe
- 20: Vorderrad
- 22: Aktor
- 24: Sensoreinrichtung
- 26: Steuergerät
- 30: Umfeldsensor
- 32: Prozessoreinrichtung
- 34: Speichereinrichtung

## Patentansprüche

1. Verfahren zum Betreiben eines Kraftfahrzeugs (10) für das Ausführen eines Parkvorgangs, wobei das Kraftfahrzeug (10) wenigstens eine erste Parkassistenzfunktion und eine zweite Parkassistenzfunktion aufweist, die wahlweise auswählbar sind, und wobei das Verfahren umfasst:
- Erfassen eines Greifzustands einer Lenkhandhabe (12) des Kraftfahrzeugs (10) durch einen Fahrer;
- automatisches Auswählen der ersten oder der zweiten Parkassistenzfunktion in Abhängigkeit des Greifzustands,
**dadurch gekennzeichnet, dass**
die erste und die zweite Parkassistenzfunktion jeweils dazu eingerichtet sind, fahrerautonome Kräfte und/oder Momente in einem Lenksystem (16) des Kraftfahrzeugs (10) zu erzeugen, wobei die erste Parkassistenzfunktion dazu eingerichtet ist, an einer Lenkhandhabe (12) zumindest temporär wirksame Momente als einen Lenkhinweis für den Fahrer zu erzeugen und die zweite Parkassistenzfunktion dazu eingerichtet ist, für das Parken erforderliche Lenkmomente fahrerautonom zu erzeugen,
ferner aufweisend:
- initiales Auswählen einer von erster und zweiter Parkassistenzfunktion auf Basis wenigstens einer Konfigurationsvorgabe; und
- Auswählen und dadurch Wechseln zu der entsprechend anderen von erster und zweiter Parkassistenzfunktion auf Basis des erfassten Greifzustands,
wobei die Konfigurationsvorgabe zumindest eine Zustandsbedingung definiert, die zum initialen Auswählen der einen von erster und/oder zweiter Parkassistenzfunktion zu erfüllen ist.

2. Verfahren nach Anspruch 1,
**dadurch gekennzeichnet, dass** von der ersten zu der zweiten Parkassistenzfunktion gewechselt wird, wenn der Greifzustand ein Nicht-Greifen der Lenkhandhabe (12) durch den Fahrer anzeigt.

3. Verfahren nach Anspruch 1,
**dadurch gekennzeichnet, dass** von der zweiten zu der ersten Parkassistenzfunktion gewechselt wird, wenn der Greifzustand ein Greifen der Lenkhandhabe (12) durch den Fahrer anzeigt.

4. Kraftfahrzeug (10), aufweisend:
- eine Lenkhandhabe (12);
- eine Sensoreinrichtung (24) zum Ermitteln eines Greifzustands der Lenkhandhabe (12) durch einen Fahrzeugfahrer;
- ein Steuergerät (26), das dazu eingerichtet ist, zwischen einer ersten und einer zweiten Parkassistenzfunktion in Abhängigkeit des ermittelten Greifzustands auszuwählen,
wobei die erste und die zweite Parkassistenzfunktion jeweils dazu eingerichtet sind, fahrerautonome Kräfte und/oder Momente in einem Lenksystem (16) des Kraftfahrzeugs (10) zu erzeugen, wobei die erste Parkassistenzfunktion dazu eingerichtet ist, an einer Lenkhandhabe (12) zumindest temporär wirksame Momente als einen Lenkhinweis für den Fahrer zu erzeugen und die zweite Parkassistenzfunktion dazu eingerichtet ist, für das Parken erforderliche Lenkmomente fahrerautonom zu erzeugen, wobei das Steuergerät (26) weiter derart ausgebildet ist, folgende Verfahrensschritte durchzuführen:
- initiales Auswählen einer von erster und zweiter Parkassistenzfunktion auf Basis wenigstens einer Konfigurationsvorgabe; und
- Auswählen und dadurch Wechseln zu der entsprechend anderen von erster und zweiter Parkassistenzfunktion auf Basis des erfassten Greifzustands,
wobei die Konfigurationsvorgabe zumindest eine Zustandsbedingung definiert, die zum initialen Auswählen der einen von erster und/oder zweiter Parkassistenzfunktion zu erfüllen ist.

## Claims

1. Method for operating a motor vehicle (10) for performing a parking procedure, the motor vehicle (10) having at least a first parking assistance function and a second parking assistance function which are selectively selectable, and the method comprising:
- detecting a gripping state of a steering handle (12) of the motor vehicle (10) by a driver;
- automatically selecting the first or second parking assistance function depending on the gripping status,
**characterized in that**
the first and the second parking assistance function are each configured to generate driver-autonomous forces and/or moments in a steering system (16) of the motor vehicle (10),
the first parking assistance function being configured to generate at least temporarily effective moments on a steering handle (12) as a steering instruction for the driver, and the second parking assistance function being configured to generate steering moments required for parking in a driver-autonomous manner,
further comprising:
- initially selecting one of the first and the second parking assistance function on the basis of at least one configuration specification; and
- selecting and thereby switching to the corresponding other of the first and the second parking assistance function on the basis of the detected gripping state,
the configuration specification defining at least one state condition that must be met for initially selecting one of the first and/or the second parking assistance function.

2. Method according to claim 1,
**characterized in that** a switch is made from the first to the second parking assistance function when the gripping state indicates that the driver is not gripping the steering handle (12).

3. Method according to claim 1,
**characterized in that** a switch is made from the second to the first parking assistance function when the gripping state indicates that the driver is gripping the steering handle (12).

4. Motor vehicle (10) comprising:
- a steering handle (12);
- a sensor device (24) for determining a gripping state of the steering handle (12) by a vehicle driver;
- a control unit (26) which is configured to select between a first and a second parking assistance function depending on the determined gripping state,
wherein the first and the second parking assistance function are each configured to generate driver-autonomous forces and/or moments in a steering system (16) of the motor vehicle (10), wherein the first parking assistance function is configured to generate at least temporarily effective moments on a steering handle (12) as a steering instruction for the driver, and the second parking assistance function is configured to generate steering moments required for parking in a driver-autonomous manner, wherein the control unit (26) is further designed to carry out the following method steps:
- initially selecting one of the first and the second parking assistance function on the basis of at least one configuration specification; and
- selecting and thereby switching to the corresponding other of the first and the second parking assistance function on the basis of the detected gripping state,
the configuration specification defining at least one state condition that must be met for initially selecting one of the first and/or the second parking assistance function.

## Revendications

1. Procédé d'exploitation d'un véhicule automobile (10) pour l'exécution d'une opération de stationnement, dans lequel le véhicule automobile (10) présente au moins une première fonction d'assistance au stationnement et une seconde fonction d'assistance au stationnement qui peuvent être sélectionnées de manière sélective, et dans lequel le procédé comprend :
- la détection d'un état de préhension d'une manette de direction (12) du véhicule automobile (10) par un conducteur ;
- la sélection automatique de la première ou de la seconde fonction d'assistance au stationnement en fonction de l'état de préhension,
**caractérisé en ce que**
la première et la seconde fonction d'assistance au stationnement sont respectivement destinées à générer des forces et/ou des couples autonomes par rapport au conducteur dans un système de direction (16) du véhicule automobile (10),
dans lequel la première fonction d'assistance au stationnement est destinée à générer sur une manette de direction (12) des couples efficaces au moins temporairement en tant qu'indication de direction pour le conducteur et la seconde fonction d'assistance au stationnement est destinée à générer de manière autonome par rapport au conducteur des couples de direction nécessaires pour le stationnement,
présentant en outre :
- la sélection initiale de l'une des première et seconde fonctions d'assistance au stationnement sur la base d'au moins une configuration prédéfinie ; et
- la sélection et ainsi le passage à l'autre fonction correspondante des première et seconde fonctions d'assistance au stationnement sur la base de l'état de préhension détecté,
dans lequel la configuration prédéfinie définit au moins une condition d'état à satisfaire pour la sélection initiale de l'une des première et/ou seconde fonctions d'assistance au stationnement.

2. Procédé selon la revendication 1,
**caractérisé en ce que** l'on passe de la première fonction d'assistance au stationnement à la seconde deuxième fonction d'assistance au stationnement lorsque l'état de préhension indique une non-préhension de la manette de direction (12) par le conducteur.

3. Procédé selon la revendication 1,
**caractérisé en ce que** l'on passe de la seconde fonction d'assistance au stationnement à la première fonction d'assistance au stationnement lorsque l'état de préhension indique une préhension de la manette de direction (12) par le conducteur.

4. Véhicule automobile (10), présentant :
- une manette de direction (12) ;
- un dispositif de capteur (24) pour déterminer un état de préhension de la manette de direction (12) par un conducteur de véhicule ;
- un appareil de commande (26) qui est destiné à sélectionner entre une première et une seconde fonction d'assistance au stationnement en fonction de l'état de préhension détecté,
dans lequel la première et la seconde fonction d'assistance au stationnement sont respectivement destinées à générer des forces et/ou des couples autonomes par rapport au conducteur dans un système de direction (16) du véhicule automobile (10), dans lequel la première fonction d'assistance au stationnement est destinée à générer des couples efficaces au moins temporairement sur une manette de direction (12) en tant qu'indication de direction pour le conducteur et la seconde fonction d'assistance au stationnement est destinée à générer des couples de direction nécessaires pour le stationnement de manière autonome par rapport au conducteur, dans lequel l'appareil de commande (26) est en outre conçu de manière à réaliser les étapes de procédé suivantes :
- la sélection initiale de l'une des première et seconde fonctions d'assistance au stationnement sur la base d'au moins une configuration prédéfinie ; et
- la sélection et ainsi le passage à l'autre fonction correspondante des première et seconde fonctions d'assistance au stationnement sur la base de l'état de préhension détecté,
dans lequel la configuration prédéfinie définit au moins une condition d'état à satisfaire pour la sélection initiale de l'une des première et/ou seconde fonctions d'assistance au stationnement.
